# EUROPEAN PATENT SPECIFICATION

(11) **EP 0 880 480 B1**
(45) Date of publication and mention of the grant of the patent: **05.12.2001**
(21) Application number: 97903398.2
(22) Date of filing: 14.02.1997
(51) Int. Cl.: C03C 13/00, C03C 13/06

(54) **MINERAL FIBRE**
MINERALFASER
FIBRE MINERALE

(30) Priority: 16.02.1996 FI 960705
(43) Date of publication of application: 02.12.1998
(73) Proprietor: Paroc Group Oy Ab, 01300 Vantaa (FI)
(72) Inventor: PERANDER, Michael, FIN-21600 Pargas (FI); HAKALA, Jan, FIN-20380 bo (FI)
(74) Representative: Grew, Eva Regina
(86) International application number: FI9700096
(87) International publication number: WO9730002

(56) References cited:
- WO-A-87/05007

## Description

The present invention relates to a fiberizable mineral composition as well as mineral fibres made therefrom which have a high temperature resistance.

Mineral fibres made by melting and centrifuging of a mineral raw material, such as rock, slag or similar, are used to a high degree for the manufacture of mineral fibre mats and blankets, primarily for heat and sound insulation purposes in the construction industry. In addition to the manufactured mat exhibiting a good insulating capacity against heat and sound, one has recently started to pay more attention to the properties of the mat also from a labour hygienic point of view.

A wide selection of insulating products are available on the market which exhibit not only different heat insulating properties, but also a varying degree of temperature resistance. Temperature resistant mineral fibre products are intended to mean products which can resist elevated temperatures under prolonged periods of time without changing shape or dimensions to any higher degree. Such products are thus attractive from a fire prevention point of view.

Conventional glass fibre is temperature resistant at temperatures up to appr. 550°C, whereas the temperature resistance of conventional rock wool is better, up to appr. 700°C. There is, however, an interest in products having an even higher temperature resistance, up to 1100-1200°C, and such products are also available on the market.

Such temperature resistant fibre products contain as the main oxides silicium oxide SiO₂, and aluminium oxide, Al₂O₃, and in addition often an earth alkaline metal oxide, such as calcium oxide, CaO, or magnesium oxide, MgO. In addition, such products can contain varying amounts of other oxides, such as titanium oxide, TiO₂, manganese oxide, MnO, boron oxide, B₂O₃, zirconium oxide, ZrO₂, chromium oxide, Cr₂O₃, the alkali oxides sodium and potassium oxide, Na₂O and K₂O, as well as contaminants. As examples of known art relevant in this connection, reference is made, for example, to US 4,461,840 and DE OS 1 496 662.

According to the last mentioned publication, an especially advantageous composition is obtained when the raw material melt contains appr. 4 - 12 % of iron oxides. In the mineral melt, the iron oxides are primarily present as divalent iron (appr. 75-90%) and to a lesser degree in the form of trivalent iron (appr. 25-10%). The iron content of the mineral melt is a consequence of the fact that many economically attractive raw materials contain iron to higher or lower degree. The presence of divalent iron has an advantageous effect on the temperature resistan-nace of the fibre, its presence for this reason being beneficial. However, in recent times, one has seriously started to pay attention to the possible toxic effects of iron in mineral fibres, especially in fibres which in addition to temperature resistance have an increased solubility in biological fluids.

Due to the toxicity risk, there is thus a need to minimize the total content of iron in mineral fibres. This, however, leads to an impairment of the temperature resistance.

According to the present invention the problem relating to decreased temperature resistance when using small amounts of iron has been solvend in a mineral fibre composition, which contains as the main oxides silicium dioxide, aluminium oxide and calcium oxide. The problem has been solved by compensating the absence or the low level of divalent iron by including in such a composition magnesium oxide in an amount so that the total amount of magnesium oxide MgO and iron oxide FeO is at least 15 % by weight. In this way a mineral fibre composition is obtained which is both temperature resistant and has low toxicity.

More specifically, the invention refers to a mineral fibre which has the following composition in % by weight

| | |
|---|---|
| SiO₂ | 35 - 45 |
| Al₂O₃ | 18 - 25 |
| TiO₂ | 0 - 3 |
| MgO | 12 - 20 |
| CaO | 10 - 20 |
| Na₂O + K₂O | 0 - 3 |
| iron (Fe₂O₃+FeO) | 0 - 3 |
| B₂O₃ | 0 - 3 |
| P₂O₅ | 0 - 4 |
| other | 0 - 3 |

whereby the sum of FeO+ MgO ≥ 15 % by weight.

The denomination "other" components above encompasses such possible contaminants which are not of substantial importance for the properties of the manufactured fibre.

It is known that within the range 0 - appr. 15 % the aluminium oxide content is direct proportional to the stability of the fibre in biological solutions, that is the more aluminium oxide the composition contains, the more stable or poorly soluble is the product. However, at a higher level, the tendency becomes reversed so that the solubility of the fibre increases in relation to the aluminium oxide content. According to the invention, a fibre has thus been made having a good heat resistance but a low toxicity and a high solubility in biological solutions.

Preferably the composition contains essentially equal amounts of MgO and CaO. According to a further preferred embodiment, the sum FeO + MgO + CaO ≤ 32 % by weight.

According to a preferred embodiment, the invention concerns a fibre having the following composition in % by weight

| | |
|---|---|
| SiO₂ | 38 - 42 |
| Al₂O₃ | 18 - 22 |
| TiO₂ | 1 - 3 |
| MgO | 14 - 18 |
| CaO | 14 - 18 |
| Na₂O + K₂O | 0 - 2 |
| iron (Fe₂O₃ + FeO) | 1 - 3 |
| B₂O₃ | 1 - 2 |
| P₂O₅ | 1 - 2 |
| other | 0 - 2 |

whereby FeO + MgO ≥ 15 % by weight.

According to a very special embodiment, the invention refers to a fibre containing substantially

| | |
|---|---|
| SiO₂ | 38 |
| Al₂O₃ | 20 |
| TiO₂ | 2 |
| MgO | 15 |
| CaO | 15 |
| Na₂O + K₂O | 1 |
| iron (Fe₂O₃ + FeO) | 3 |
| B₂O₃ | 2 |
| P₂O₅ | 2 |
| other | 2. |

The mineral composition is made in a conventional manner by mixing suitable raw material a such as stone, sand, dolomite, apatite, olivine, glass, or various slags and other suitable waste materials in suitable proportions. According to a preferred embodiment, the predominant raw material is slag fom iron manufacture, as such a product in itself is already iron poor. The desired increased aluminium oxide content can be obtained by adding suitable aluminium containing raw materials, for example bauxite, in suitable amounts. Mineral fibres are manufactured from the composition in a conventional manner, for example using cascade centrifugation.

The following example illustrates the invention without restricting the same.

### Example

In a cupola furnace the following components are charged having the compositions indicated in the table, in the amounts indicated in % by weight.

| | Calc. bauxite | Quartz sand | Slag | Apatite | Olivine sand |
|---|---|---|---|---|---|
| amount: component: | 20.0 | 14.0 | 33.0 | 5.0 | 28.0 |
| SiO₂ | 5.0 | 99.1 | 36.0 | 3.2 | 42.0 |
| Al₂O₃ | 86.5 | 0.6 | 9.0 | 0.3 | 0.5 |
| TiO₂ | 4.0 | 0.0 | 1.0 | 0.0 | 0.0 |
| MgO | 0.0 | 0.0 | 10.2 | 0.5 | 49.3 |
| CaO | 0.0 | 0.0 | 37.8 | 50.8 | 0.0 |
| Na₂O+ | | | | | |
| K₂O | 0.3 | 0.1 | 1.1 | 0.0 | 0.0 |
| iron | 1.9 | 0.1 | 0.3 | 0.8 | 7.1 |
| B₂O₃ | 0.0 | 0.0 | 0.0 | 0.0 | 0.0 |
| P₂O₅ | 0.2 | 0.0 | 0.0 | 33.0 | 0.0 |
| other | 0.0 | 0.1 | 1.1 | 8.3 | 1.1 |
| | | | | | |

From the melt obtained fibres are made in a conventional manner by cascade centrifugation, which fibres are collected onto a conveyor to form a mineral fibre mat. The mineral fibres have the following composition.

| | |
|---|---|
| SiO₂ | 40.0 |
| Al₂O₃ | 21.2 |
| TiO₂ | 1.2 |
| MgO | 17.8 |
| CaO | 15.5 |
| Na₂O + K₂O | 0.4 |
| iron (Fe₂O₃+FeO) | 1.7 |
| B₂O₃ | 0 |
| P₂O₅ | 1.7 |
| other | 0.5. |

## Claims

1. Mineral fibre, **characterized in that** it has the following composition in % by weight:
| | |
|---|---|
| SiO₂ | 35 - 45 |
| Al₂O₃ | 18 - 25 |
| TiO₂ | 0 - 3 |
| MgO | 12 - 20 |
| CaO | 10 - 20 |
| Na₂O + K₂O | 0 - 3 |
| iron (Fe₂O₃+FeO) | 0 - 3 |
| B₂O₃ | 0 - 3 |
| P₂O₅ | 0 - 4 |
| other | 0 - 3 |
whereby the sum FeO+ MgO ≥ 15 % by weight.

2. The mineral fibre according to claim 1, **characterized in that** it contains substantially equal amounts of MgO and CaO.

3. The mineral fibre according to claim 1 or 2, **characterized in that** the FeO + MgO + CaO ≤ 32 % by weight.

4. The mineral fibre according to claim 1, 2 or 3, **characterized in that** it has the following composition in % by weight:
| | |
|---|---|
| SiO₂ | 38 - 42 |
| Al₂O₃ | 18 - 22 |
| TiO₂ | 1 - 3 |
| MgO | 14 - 18 |
| CaO | 14 - 18 |
| Na₂O + K₂O | 0 - 2 |
| iron (Fe₂O₃ + FeO) | 1 - 3 |
| B₂O₃ | 1 - 2 |
| P₂O₅ | 1 - 2 |
| other | 0 - 2 |
whereby FeO + MgO ≥ 15 % by weight.

5. The mineral fibre according to claim 4, **characterized in that** it has substantially the following composition in % by weight:
| | |
|---|---|
| SiO₂ | 38 |
| Al₂O₃ | 20 |
| TiO₂ | 2 |
| MgO | 15 |
| CaO | 15 |
| Na₂O + K₂O | 1 |
| iron (Fe₂O₃+FeO) | 3 |
| B₂O₃ | 2 |
| P₂O₅ | 2 |
| other | 2. |

## Patentansprüche

1. Mineralfaser, **dadurch gekennzeichnet, dass** sie die folgende Zusammensetzung in Gewichtsprozenten aufweist:
| | |
|---|---|
| SiO₂ | 35 bis 45 |
| Al₂O₃ | 18 bis 25 |
| TiO₂ | 0 bis 3 |
| MgO | 12 bis 20 |
| CaO | 10 bis 20 |
| Na₂O + K₂O | 0 bis 3 |
| Eisen (Fe₂O₃ + FeO) | 0 bis 3 |
| B₂O₃ | 0 bis 3 |
| P₂O₅ | 0 bis 4 |
| Rest | 0 bis 3 |
wobei FeO + MgO ≥ 15 Gew.-%.

2. Mineralfaser gemäss Anspruch 1, **dadurch gekennzeichnet, dass** sie im wesentlichen gleiche Mengen von MgO und CaO enthält.

3. Mineralfaser gemäss Anspruch 1 oder 2, **dadurch gekennzeichnet, dass** FeO + MgO + CaO ≤ 32 Gew.-%.

4. Mineralfaser gemäss Anspruch 1, 2 oder 3, **dadurch gekennzeichnet, dass** sie die folgende Zusammensetzung in Gewichtsprozenten aufweist:
| | |
|---|---|
| SiO₂ | 38 bis 42 |
| Al₂O₃ | 18 bis 22 |
| TiO₂ | 1 bis 3 |
| MgO | 14 bis 18 |
| CaO | 14 bis 18 |
| Na₂O + K₂O | 0 bis 2 |
| Eisen (Fe₂O₃ + FeO) | 1 bis 3 |
| B₂O₃ | 1 bis 2 |
| P₂O₅ | 1 bis 2 |
| Rest | 0 bis 2 |
wobei FeO + MgO ≥ 15 Gew.-%.

5. Mineralfaser gemäss Anspruch 4, **dadurch gekennzeichnet, dass** sie im wesentlichen die folgende Zusammensetzung in Gewichtsprozenten aufweist:
| | |
|---|---|
| SiO₂ | 38 |
| Al₂O₃ | 20 |
| TiO₂ | 2 |
| MgO | 15 |
| CaO | 15 |
| Na₂O + K₂O | 1 |
| Eisen (Fe₂O₃ + FeO) | 3 |
| B₂O₃ | 2 |
| P₂O₅ | 2 |
| Rest | 2. |

## Revendications

1. Fibre minérale, **caractérisée en ce qu'**elle a la composition suivante en % en poids :
| | |
|---|---|
| SiO₂ | 35 - 45 |
| Al₂O₃ | 18 - 25 |
| TiO₂ | 0 - 3 |
| MgO | 12 - 20 |
| CaO | 10 - 20 |
| Na₂O + K₂O | 0 - 3 |
| fer (Fe₂O₃ + FeO) | 0 - 3 |
| B₂O₃ | 0 - 3 |
| P₂O₅ | 0 - 4 |
| autre | 0 - 3 |
dans laquelle la somme FeO + MgO ≥ 15 % en poids.

2. Fibre minérale suivant la revendication 1, **caractérisée en ce qu'**elle contient des quantités essentiellement égales de MgO et CaO.

3. Fibre minérale suivant la revendication 1 ou 2, **caractérisée en ce que** FeO + MgO + CaO ≤ 32 % en poids.

4. Fibre minérale suivant l'une quelconque des revendications 1 à 3, **caractérisée en ce qu'**elle a la composition suivante en % en poids :
| | |
|---|---|
| SiO₂ | 38 - 42 |
| Al₂O₃ | 18 - 22 |
| TiO₂ | 1 - 3 |
| MgO | 14 - 18 |
| CaO | 14 - 18 |
| Na₂O + K₂O | 0 - 2 |
| fer (Fe₂O₃ + FeO) | 1 - 3 |
| B₂O₃ | 1 - 2 |
| P₂O₅ | 1 - 2 |
| autre | 0 - 2 |
dans laquelle la somme FeO + MgO ≥ 15 % en poids.

5. Fibre minérale suivant la revendication 4, **caractérisée en ce qu'**elle a essentiellement la composition suivante en % en poids :
| | |
|---|---|
| SiO₂ | 38 |
| Al₂O₃ | 20 |
| TiO₂ | 2 |
| MgO | 15 |
| CaO | 15 |
| Na₂O + K₂O | 1 |
| fer (Fe₂O₃ + FeO) | 3 |
| B₂O₃ | 2 |
| P₂O₅ | 2 |
| autre | 2 |
